**Europäisches Patentamt**

**European Patent Office**

**Office européen des brevets**

(11) Veröffentlichungsnummer : **0 063 750**
**B1**

(12) # EUROPÄISCHE PATENTSCHRIFT

(45) Veröffentlichungstag der Patentschrift :
18.06.86

(51) Int. Cl.⁴ : **C 01 F   7/54**

(21) Anmeldenummer : **82103164.8**

(22) Anmeldetag : **15.04.82**

(54) **Verfahren zur Herstellung von Kaliumtetrafluoroaluminat.**

(30) Priorität : **25.04.81 DE 3116469**

(43) Veröffentlichungstag der Anmeldung :
**03.11.82 Patentblatt 82/44**

(45) Bekanntmachung des Hinweises auf die Patenterteilung : **18.06.86 Patentblatt 86/25**

(84) Benannte Vertragsstaaten :
**AT BE DE FR GB IT NL**

(56) Entgegenhaltungen :
**JOURNAL OF THE CHEMICAL SOCIETY, 1947, Seiten 1172-1175, The Chemical Society, London, GB F.A. PAINE et al.: "Potassium Fluoaluminates"**
**CHEMICAL ABSTRACTS, Band 91, Nr. 13, 24. September 1979, Nr. 116548t, Columbus, Ohio, USA L. KOLDITZ et al.: "The reactions of dipotassium hexafluorosilicate with aluminum oxide"**
**"BROSSETT" ZEITSCHRIFT FÜR ANORGANISCHE CHEMIE 239 (1938), SEITEN 301/2**
**Die Akte enthält technische Angaben, die nach dem Eingang der Anmeldung eingereicht wurden und die nicht in dieser Patentschrift enthalten sind.**

(73) Patentinhaber : **Kali-Chemie Aktiengesellschaft Postfach 220 Hans-Böckler-Allee 20 D-3000 Hannover 1 (DE)**

(72) Erfinder : **Willenberg, Heinrich, Dr. rer. nat. Dipl.-Chem. Theodor-Storm-Strasse 2 D-3008 Garbsen 4 (DE)**
Erfinder : **Hellberg, Karl-Heinz, Dr. rer. nat. Dipl.-Chem. Am Papehof 21 D-3000 Hannover 91 (DE)**
Erfinder : **Zschiesche, Heinz Berliner Allee 68 D-3000 Hannover 1 (DE)**

(74) Vertreter : **Lauer, Dieter, Dr. c/o Kali-Chemie Aktiengesellschaft Postfach 220 D-3000 Hannover 1 (DE)**

**Beschreibung**

Die vorliegende Erfindung betrifft ein Verfahren zur Herstellung von Kaliumtetrafluoroaluminat.

Übliche technische Methoden ausgehend von Tonerdehydrat, Flußsäure und Ätzkali führen nach Trennung des Feststoffes von der Mutterlauge zu einem nicht unter 620 °C schmelzenden Produkt, das nur für bestimmte Anwendungsbereiche geeignet ist. Zur Ausbeuteerhöhung wird Ätzkali meistens in Überschüssen bis zu 20 % eingesetzt, wobei sich der Schmelzpunkt kaum verändert.

Es besteht die Möglichkeit, niedriger schmelzendes Kaliumfluoroaluminat durch Eindampfen einer Suspension herzustellen, die durch Vereinigung stöchiometrischer Mengen der einzelnen Komponenten gebildet wurde. Wegen des hohen Energieverbrauchs ist dieses Verfahren sehr kostspielig.

Die technische Herstellung von unter 575 °C rückstandsfrei schmelzendem Kaliumtetrafluoroaluminat erfolgt durch Verschmelzung von gemahlenem Kaliumfluorid und Aluminiumfluorid bei über 600 °C und anschließendem Aufmahlen der erstarrten Schmelze. Auch dieses Verfahren hat einen hohen Energiebedarf ; außerdem enthält das resultierende Produkt häufig unerwünschte Kontaminationen.

Aufgabe der Erfindung ist es, ein Verfahren zur Herstellung von bei max. 575 °C rückstandsfrei schmelzendem Kaliumtetrafluoroaluminat zur Verfügung zu stellen, das die geschilderten Nachteile des Standes der Technik überwindet.

Die Lösung der Aufgabe erfolgt durch Bereitstellung des durch die Patentansprüche gekennzeichneten Verfahrens.

Aufgrund der Untersuchungen von Schmelzgleichgewichten (siehe z. B. B. Philipps, C. M. Warshaw, J. Mockrin in J. amer. ceram. Soc. *49* (1966) 631) erscheint es als gesichert, daß feste Phasen der Zusammensetzung 50 Molprozent Kaliumfluorid und 50 Molprozent Aluminiumfluorid die Verbindung der Formel $KAlF_4$ enthalten, die bei 574 °C schmilzt und mit $K_3AlF_6$ ein bei etwa 560 °C schmelzendes Eutektikum bildet. Erfindungsgemäß umfaßt der Begriff « Kaliumtetrafluoroaluminat mit Schmelzpunkt von max. 575 °C » sowohl reines $KAlF_4$ als auch seine Gemische mit $K_3AlF_6$ bzw. $AlF_3$, die bei max. 575 °C schmelzen. Diese Gemische enthalten ungefähr 43 Molprozent bis 50 Molprozent $AlF_3$ (Rest KF).

Sofern man die Aussagen des Schmelzdiagrammes überhaupt auf wässrige Systeme übertragen kann, müßte man annehmen, optimale Ergebnisse mit Ansätzen zu erhalten, die äquimolar bezüglich Kalium und Aluminium sind oder Kalium im Überschuß enthalten. Bei der Umsetzung von Fluoroaluminiumsäure mit Kaliumverbindungen wird bei diesen Ansatzverhältnissen kein zufriedenstellendes Produkt erhalten. Überraschenderweise und entgegen der Erwartung wird aber ein Produkt mit einem Schmelzpunkt von max. 575 °C erhalten, wenn man, bezogen auf den Gesamtansatz, die Kaliumverbindung im stöchiometrischen Unterschuß einsetzt. Bevorzugt wird dabei für den Gesamtansatz ein Molverhältnis von Kalium zu Aluminium im Bereich von 0,60 : 1 bis 0,95 : 1, insbesondere 0,80 : 1 bis 0,90 : 1.

Es ist vorteilhaft, die Fluoraluminiumsäure aus Tonerdehydrat und Flußsäure frisch zu bereiten. Bevorzugt gelangt Säure einer Konzentration von 5-30 Gewichtsprozent, insbesondere 15-25 Gewichtsprozent, zum Einsatz.

In einer weiteren vorteilhaften Variante weist die Fluoroaluminiumsäure einen Überschuß an Fluorid auf. Bevorzugt liegt das Verhältnis Fluor zu Aluminium im Bereich von 4,0 : 1 bis 4,8 : 1, vorzugsweise 4,0 : 1 bis 4,4 : 1.

Zur Reaktion mit der Fluoroaluminiumsäure wird bevorzugt wässrige Kaliumhydroxid-Lösung einer Konzentration von 2-25 Gewichtsprozent, vorzugsweise 10-20 Gewichtsprozent, eingesetzt. In einer Variante des Verfahrens kann ein Teil des Kaliumhydroxids durch andere Kaliumverbindungen, insbesondere durch Kaliumchlorid, ersetzt sein. Das Molverhältnis von Kaliumchlorid zu Kaliumhydroxid in der wässrigen Lösung muß zur Erzielung zufriedenstellender Ergebnisse aber unterhalb von 3,0 : 1 liegen.

Die Umsetzung kann bei Temperaturen im Bereich von Raumtemperatur bis zum Kochpunkt des Reaktionsgemisches vorgenommen werden. Bevorzugt werden aber Temperaturen im Bereich von 70 °C bis 90 °C. Für diesen Fall wird besonders wirtschaftlich verfahren, wenn die umzusetzenden Lösungen direkt vorher hergestellt werden und ohne Zwischenkühlung, also unter Ausnutzung der Lösungsenthalpie miteinander vereinigt werden.

Die Fällungsrichtung ist prinzipiell frei wählbar. Es hat sich allerdings gezeigt, daß bei batchweiser Umsetzung die Fluoroaluminiumsäure vorteilhafterweise vorgelegt wird. Für die kontinuierliche Herstellung bietet sich aus verfahrensökonomischen Gründen dagegen die gleichzeitige Einspeisung beider Reaktionspartner in das Reaktionsgefäß an.

Während der Vermischung der Reaktionspartner innerhalb von 0,2-2,0 Stunden wird die Reaktionslösung vorteilhafterweise gerührt sowie die Temperatur in etwa konstant gehalten. Zur Vervollständigung der Reaktion empfiehlt es sich, das Reaktionsgemisch anschließend etwa dieselbe Zeitspanne lang zu rühren. Dabei kann durch weitere Wärmezufuhr die Temperatur auf dem Anfangswert gehalten werden. In einer bevorzugten Variante wird in der Nachreaktionsphase keine weitere Wärme mehr zugeführt. Als Trennoperationen können alle üblichen Filtrations- und Zentrifugationsverfahren zur Anwendung kommen.

Bei Einhaltung der erfindungsgemäßen Verfahrensbedingungen erhält man ein unter 575 °C

2

rückstandsfrei schmelzendes Kaliumtetrafluoroaluminat in guten Ausbeuten (z. B. 97 % bezüglich Kalium und 84 % bezüglich Fluor).

Das Verfahrensprodukt findet Einsatz z. B. als aktiver Füllstoff in Schleifmitteln oder als Hilfsstoff auf den Gebieten der Metallurgie und Glasherstellung.

Die folgenden Beispiele dienen der weiteren Beschreibung des Verfahrens. Sie sind bezüglich Kaliumtetrafluoroaluminat 2-molare Ansätze. Die Schmelzpunkte der bei 120 °C getrockneten Produkte wurden in einem geeichten Muffelofen und durch Differentialthermoanalyse bestimmt.

Beispiele 1-8

Unter den in Tabelle 1 angegebenen Bedingungen wurde zu Fluoroaluminiumsäure bei 80 °C innerhalb von etwa 1 Stunde unter Rühren Kaliumhydroxid-Lösung dosiert, die in den Ansätzen 4 und 5 zusätzlich Kaliumchlorid enthielt. Nach etwa 1/2 Stunde Rühren ohne weitere Wärmezufuhr wurde filtriert und der Filterrückstand getrocknet. Die Kenndaten der erhaltenen Produkte sind in Tabelle 1 angeführt.

In Beispiel 8 wurden beide Reaktionspartner gleichzeitig in das Reaktionsgefäß eindosiert. Von dort wurde das Reaktionsgemisch zur Nachreaktion in einen zweiten Reaktor derart überführt, daß im ersten Reaktor die Füllhöhe zwischen 90 und 100 % oszillierte. Nach einer mittleren Verweilzeit von ca. 1/2 Stunde im zweiten Reaktor wurde das Reaktionsgemisch kontinuierlich der Filtrationsstufe zugeführt und wie in den anderen Beispielen verarbeitet.

Beispiele 5 und 7 sind nicht erfindungsgemäße Vergleichsversuche.

Folgende in Tabelle 1 angegebene Verhältnisse sind Molverhältnisse :

F/Al in der Fluoroaluminiumsäure
KCl/KOH in der Kalilauge
K/Al im Gesamtansatz
K/Al im Kaliumtetrafluoroaluminat
F/Al im Kaliumtetrafluoroaluminat

(Siehe Tabelle 1 Seite 4 f.)

Tabelle 1

| | Einsatzkomponenten | | | | | Produkt | | | | |
| | HAlF$_4$ | | KOH | | | | | | Ausbeute % | |
| | Konz. | | Konz. | KCl | | Smp | | | | |
| Beispiel | Gew.% | F/Al | Gew.% | KOH | K/Al | °C | K/Al | F/Al | bez.K | bez. F |
|---|---|---|---|---|---|---|---|---|---|---|
| 1 | 21 | 4,4 | 10 | 0 | 0,80 | 570 | 1,10 | 4,15 | 97 | 68 |
| 2 | 21 | 4,0 | 10 | 0 | 0,90 | 570 | 1,16 | 4,12 | 97 | 84 |
| 3 | 21 | 4,4 | 10 | 0 | 0,90 | 570 | 1,11 | 4,22 | 98 | 79 |
| 4 | 21 | 4,2 | 5 | 1,0 | 0,90 | 572 | 1,10 | 4,16 | 96 | 79 |
| 5 | 21 | 4,2 | 2,5 | 3,0 | 0,90 | 590[x] | 0,95 | 3,98 | 80 | 72 |
| 6 | 21 | 4,2 | 20 | 0 | 0,90 | 575 | 1,17 | 3,83 | 99 | 69 |
| 7 | 21 | 4,2 | 15 | 0 | 1,0 | 585[x] | 1,28 | 4,33 | 89 | 77 |
| 8 | 21 | 4,0 | 10 | 0 | 0,90 | 572 | 1,18 | 4,27 | 93 | 76 |

*) Schmelzbeginn

**Patentansprüche**

1. Verfahren zur Herstellung von Kaliumtetrafluoroaluminat mit einem Schmelzpunkt von max 575 °C, und der Zusammensetzung 43-50 Mol % $AlF_3$ und 57-50 Mol % KF dadurch gekennzeichnet, daß man wässrige Fluoroaluminiumsäure mit einem stöchiometrischen Unterschuß, bezogen auf den Gesamtansatz, einer wässrigen Kaliumhydroxid-Lösung, gegebenenfalls unter teilweisem Ersatz von Kaliumhydroxid durch eine andere Kaliumverbindung, umsetzt und die entstehende Suspension, gegebenenfalls nach einer Nachreaktionszeit, einer gebräuchlichen Trennoperation unterzieht.

2. Verfahren nach Anspruch 1, dadurch gekennzeichnet, daß man für den Gesamtansatz ein Molverhältnis von Kalium zu Aluminium im Bereich von 0,60 : 1 bis 0,95 : 1, vorzugsweise 0,80 : 1 bis 0,90 : 1, einstellt.

3. Verfahren nach einem der Ansprüche 1 oder 2, dadurch gekennzeichnet, daß man Fluoroaluminiumsäure einer Konzentration von 5 bis 30 Gewichts-%, vorzugsweise 15 bis 25 Gewichts-% einsetzt.

4. Verfahren nach einem der Ansprüche 1 bis 3, dadurch gekennzeichnet, daß man Fluoroaluminiumsäure einsetzt mit einem Molverhältnis von Fluor zu Aluminium im Bereich von 4,0 : 1 bis 4,8 : 1, vorzugsweise 4,0 : 1 bis 4,4 : 1.

5. Verfahren nach einem der Ansprüche 1 bis 4, dadurch gekennzeichnet, daß man als wässrige Lösung der Kaliumverbindung Kaliumhydroxid-Lösung einer Konzentration von 2 bis 25 Gewichts-%, vorzugsweise 10 bis 20 Gewichts-%, einsetzt.

6. Verfahren nach Anspruch 5, dadurch gekennzeichnet, daß man einen Teil des Kaliumhydroxids durch Kaliumchlorid ersetzt, wobei das Molverhältnis von Kaliumchlorid zu Kaliumhydroxid in der wässrigen Lösung unterhalb von 3,0 : 1 liegt.

7. Verfahren nach einem der Ansprüche 1 bis 6, dadurch gekennzeichnet, daß man die Umsetzung bei Temperaturen im Bereich von Raumtemperatur bis zum Kochpunkt des Reaktionsgemisches, vorzugsweise von 70 °C bis 90 °C durchführt.

**Claims**

1. Process for the preparation of potassium tetrafluoroaluminate with a melting point of a maximum of 575 °C, and with the composition 43-50 mol % $AlF_3$ and 57-50 mol % KF, characterised in that aqueous fluoroaluminium acid is reacted with a stoichiometric deficit, in relation to the total formulation, of an aqueous potassium hydroxide solution, if required with partial replacement of potassium hydroxide by another potassium compound, and the resulting suspension, if required after a post-reaction period, is subjected to a conventional separation operation.

2. Process according to Claim 1, characterised in that for the total formulation a molar ration of potassium to aluminium is set in the range from 0.60 : 1 to 0.95 : 1, preferably 0.80 : 1 to 0.90 : 1.

3. Process according to one of Claims 1 or 2, characterised in that fluoroaluminium acid with a concentration of 5 to 30 %-wt., preferably 15 to 25 %-wt. is used.

4. Process according to one of Claims 1 to 3, characterised in that fluoroaluminium acid is used with a molar ratio of fluorine to aluminium in the range from 4.0 : 1 to 4.8 : 1, preferably 4.0 : 1 to 4.4 : 1.

5. Process according to one of Claims 1 to 4, characterised in that as aqueous solution of the potassium compound, potassium hydroxide solution of a concentration of 2 to 5 %-wt., preferably 10 to 20 %-wt. is used.

6. Process according to Claim 5, characterised in that a part of the potassium hydroxide is replaced by potassium chloride, the molar ratio of potassium chloride to potassium hydroxide in the aqueous solution lying below 3.0 : 1.

7. Process according to one of Claims 1 to 6, characterised in that the reaction is carried out at temperatures in the range from ambient temperature up to the boiling point of the reaction mixture, preferably from 70 °C to 90 °C.

**Revendications**

1. Procédé de préparation de tétrafluoroaluminate de potassium avec un point de fusion de 575 °C au maximum et constitué de 43 à 50 % molaire d'$AlF_3$ et de 57 à 50 % molaire de KF, caractérisé en ce que l'on fait réagir de l'acide fluoroaluminique aqueux avec un déficit stœchiométrique, par rapport au mélange total, d'une solution d'hydroxyde de potassium aqueuse, éventuellement avec remplacement partiel de l'hydroxyde de potassium par un autre composé du potassium et que l'on soumet la suspension résultante, éventuellement avec un temps de postréaction, à une opération de séparation courante.

2. Procédé selon la revendication 1, caractérisé en ce que, pour la charge totale, on fixe un rapport molaire de potassium à aluminium dans la gamme de 0,60 : 1 à 0,95 : 1, de préférence de 0,80 : 1 à 0,90 : 1.

3. Procédé selon l'une des revendications 1 ou 2, caractérisé en ce qu'on met en œuvre de l'acide fluoroaluminique d'une concentration de 5 à 30 % en poids, de préférence de 15 à 25 % en poids.

5

4. Procédé selon l'une des revendications 1 à 3, caractérisé en ce qu'on met en œuvre de l'acide fluoroaluminique avec un rapport molaire de fluor à aluminium dans la gamme de 4,0 : 1 à 4,8 : 1, de préférence de 4,0 : 1 à 4,4 : 1.

5. Procédé selon l'une des revendications 1 à 4, caractérisé en ce qu'on utilise comme solution aqueuse du composé de potassium, une solution d'hydroxyde de potassium d'une concentration de 2 à 25 % en poids, de préférence de 10 à 20 % en poids.

6. Procédé selon la revendication 5, caractérisé en ce qu'on remplace une partie de l'hydroxyde de potassium par du chlorure de potassium, moyennant quoi le rapport molaire de chlorure de potassium à hydroxyde de potassium dans la solution aqueuse se situe au-dessous de 3,0 : 1.

7. Procédé selon l'une des revendications 1 à 6, caractérisé en ce que l'on conduit la réaction à des températures comprises entre la température ambiante et le point d'ébullition du mélange réactionnel, de préférence de 70 °C à 90 °C.